# EUROPEAN PATENT APPLICATION

(11) **EP 4 016 441 A1**
(43) Date of publication of application: **22.06.2022**
(21) Application number: 21814147.1
(22) Date of filing: 25.02.2021
(51) Int. Cl.: G06Q 50/34

(54) **INFORMATION PROCESSING DEVICE, INFORMATION PROCESSING METHOD, AND PROGRAM**

(30) Priority: 29.05.2020 JP 2020094057
(71) Applicant: Mixi, Inc., Tokyo 150-6136 (JP)
(72) Inventor: TOYOSHIMA, Yuki, Tokyo 150-6136 (JP)
(74) Representative: Plougmann Vingtoft a/s
(86) International application number: PCT/JP2021/007088
(87) International publication number: WO 2021/240923

(57) **Abstract**

An information processing device 10 includes: a reception unit 111 for receiving a bet placed on a first race by a user or an associated user who is associated with the user; a condition determination unit 112 for determining, on the basis of information of the first race, a competition condition of which the user is to be notified; and an information notification unit 113 for notifying the user of information of a second race, which is among a plurality of bettable races and which satisfies the condition determined by the condition determination unit 112.

## Description

### TECHNICAL FIELD

The present invention relates to an information processing apparatus, an information processing method, and a program.

### BACKGROUND OF THE INVENTION

A system is known in which a bet (vote) can be placed from a portable device on various competitions, such as a bicycle race, a horse race, a motorboat race, or the like. Patent Document 1 discloses a system in which a user can purchase a betting ticket by searching for a race in which a player or a racehorse designated by the user will compete.

### PRIOR ART

### PATENT DOCUMENT

[Patent Document 1] Japanese Unexamined Patent Application Publication No. 2004-334404

### SUMMARY OF INVENTION

### PROBLEMS TO BE SOLVED BY THE INVENTION

In the system disclosed in Patent Document 1, a search designating a player or a racehorse in advance was required to be done before the start of a race in which a user's favorite player or racehorse competes. Therefore, even though the race in which the user's favorite player or racehorse competes will be held, there is a case where the user misses an opportunity to place a bet because he/she could not be aware of it.

The disclosure focus on this point and its object is to make it easier for a user to continue placing bets on competitions.

### MEANS FOR SOLVING THE PROBLEMS

An information processing apparatus according to an aspect of the present invention includes an accepting part that accepts a bet on a first competition placed by a user or an associated user associated with the user; a condition determination part that determines a condition of a competition to be notified to the user on the basis of information on the first competition; and an information notification part that notifies the user about information on a second competition that satisfies the condition determined by the condition determination part among a plurality of competitions on which a bet can be placed.

### EFFECT OF THE INVENTION

According to the present disclosure, an effect of making it easier for a user to continue placing bets on competitions can be achieved.

### BRIEF DESCRIPTION OF THE DRAWINGS

FIG. 1 shows an example of a system configuration of a betting system according to the present embodiment.
FIG. 2 shows an example of a hardware configuration of an information processing apparatus.
FIG. 3 shows an example of a competition table.
FIG. 4 shows an example of a betting history table.
FIG. 5 shows an example of a hardware configuration of a terminal.
FIG. 6 shows a functional block configuration example of a processor.
FIG. 7 shows an example in which a betting reception screen is displayed on the terminal.
FIG. 8 shows an example in which information on a second competition is displayed on the terminal.
FIG. 9 is a flowchart showing processing of how the information processing apparatus determines a condition of a competition to be notified to a bettor.
FIG. 10 is a flowchart showing processing in which the information processing apparatus notifies the bettor about information on the second competition.

### DETAILED DESCRIPTION OF THE INVENTION

### <System configuration>

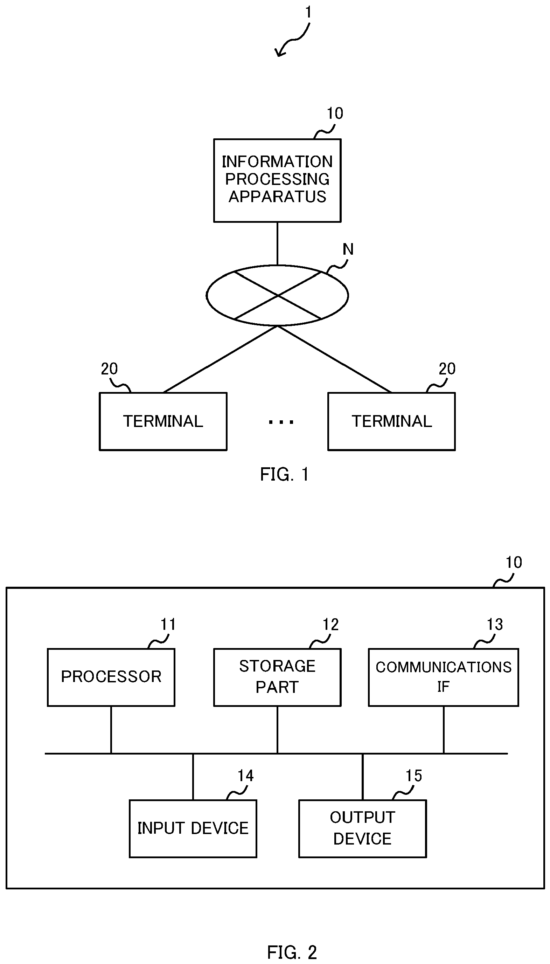

FIG. 1 shows an example of a system configuration of a betting system 1 according to the present embodiment. Abetting system 1 shown in FIG. 1 includes an information processing apparatus 10 and one or more terminals 20. The information processing apparatus 10 and the terminal 20 are connected to each other in a manner enabling communications via a communication network N such as the Internet, an intranet, a wireless LAN, or a mobile communication network.

The information processing apparatus 10 is an apparatus that accepts a bet for a competition in which a bet can be placed on a betting target. Specifically, the information processing apparatus 10 is an apparatus for supporting a bettor, who is a user, and uses the terminal 20 to bet, in a competition such as a bicycle race, a horse race, or a motorboat race, a predetermined value on a contestant (including an animal or player) who is expected to win the competition.

The bettor may place a bet by determining a betting target defined by a combination of (i) a betting type (i.e., wager type) and (ii) a plurality of contestants or starting gate numbers corresponding to the plurality of contestants expected to win a competition, and by setting (i) the determined betting target and (ii) a predetermined value of the number of bets or a wager amount for the betting target to the terminal 20. In a case where a bicycle race is the competition to be the object of betting, the betting target is "the contestant number 5 comes in first and the contestant number 3 comes in second" selected in a betting type of "a perfecta" or "the contestant numbers 1, 2, and 5" selected in a betting type of "a trio," for example. Note that the perfecta is to predict two contestants who come in the first and second places in exact order, and the trio is to predict three contestants who come in the first, second and third places in any order.

The predetermined value may be (i) money or (ii) points or the like which are usable in predetermined services or games. Also, the points may be points that can be received by the bettor for free (free points), or points that can be received in exchange for payment of money (chargeable points).

The information processing apparatus 10 includes one or a plurality of physical servers. The information processing apparatus 10 may be configured using a virtual server operating on a hypervisor or may be configured using a cloud server, for example.

The terminal 20 is a terminal used by a bettor who places a bet, and is an information processing terminal such as a cell phone (including a smartphone), a tablet terminal, or a personal computer, for example. The bettor can bet on the betting target by operating the terminal 20. Upon accepting an input of the betting target from the bettor, the terminal 20 transmits information indicating the betting target to the information processing apparatus 10 in association with bettor identification information (hereinafter referred to as a "bettor ID") for identifying the bettor who uses the terminal 20.

The information processing apparatus 10 executes a process of storing the betting target bet on by the bettor who uses the terminal 20, a process of storing the magnitude of a value owned by the bettor, a process of determining a reward amount (i.e., a payout) according to a result of a competition, and the like.

When a bettor places a bet, there are cases where the bettor searches for his/her favorite player or racehorse and searches for his/her favorite graded race. If the bettor forgets to do a search, although the competition on which the bettor wants to place a bet will be held, he/she is unable to be aware of it and may miss an opportunity to bet.

On the other hand, in the betting system 1, if a bet on a competition accepted from the bettor is a win, the information processing apparatus 10 determines a condition of a competition to be notified to the bettor on the basis of information on said competition. The information processing apparatus 10 notifies the bettor about the information on the competition that satisfies the determined condition among a plurality of competitions on which a bet can be placed. In this way, the bettor can grasp that another competition similar to the competition corresponding to his/her winning bet will take place. The competition corresponding to the winning bet is, for example, a competition in which an order of finishing of players or racehorses that participated in the competition was an order of finishing corresponding to the betting target bet on by the bettor. For example, in a case where the betting target bet on by the bettor on a competition is "a perfecta, in which the contestant number 5 comes in first and the contestant number 3 comes in second," if the contestant number 5 came in first and the contestant number 3 came in second in that competition, then that competition is a competition corresponding to a winning bet.

The bettor's favorite contestant (player, racehorse, or the like) may appear in the competition corresponding to the winning bet, or the competition corresponding to the winning bet may be the bettor's favorite graded race. In addition, due to the winning of a bet, there is a possibility that the contestant or the graded race relating to the winning betting target may become the bettor's favorite contestant or graded race thereafter. Therefore, by notifying the bettor that another competition, which is at least partially similar (overlapping) in contestants, grades, or the like to the competition for which the bettor's bet was a win, will take place, placing bets continuously on the competitions becomes easier for the bettor because the possibility of the bettor placing a bet on the notified competition increases. Next, configurations and operations of the information processing apparatus 10 and the terminal 20 will be described in detail.

### <Hardware configuration>

FIG. 2 shows an example of a hardware configuration of the information processing apparatus 10. The information processing apparatus 10 includes a processor 11, a storage part 12, a communications interface (IF) 13, an input device 14, and an output device 15.

The processor 11 is a central processing unit (CPU) or a graphical processing unit (GPU), and realizes various functions by executing a program stored in the storage part 12, for example.

The storage part 12 includes a storage medium such as a memory, a hard disk drive (HDD), or a solid state drive (SSD). The storage part 12 stores the program executed by the processor 11. The storage part 12 stores a competition table including information on each of a plurality of competitions.

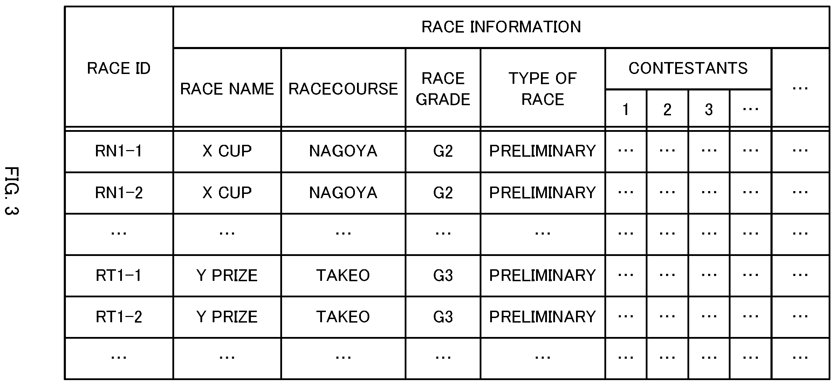

FIG. 3 shows an example of the competition table. In the competition table shown in FIG. 3, (i) a race ID identifying a competition and (ii) race information related to the competition are associated with each other. As shown in FIG. 3, the race information includes at least a race name, a racecourse, a race grade, a type of race, and contestants. The race information is not limited to the example shown in FIG. 3. The race information may include event dates, event venues, event grades, event categories (morning race, daily race, night race, midnight race, etc.), a title of the event, race numbers, and a type of race (men's bicycle race, women's bicycle race, etc.).

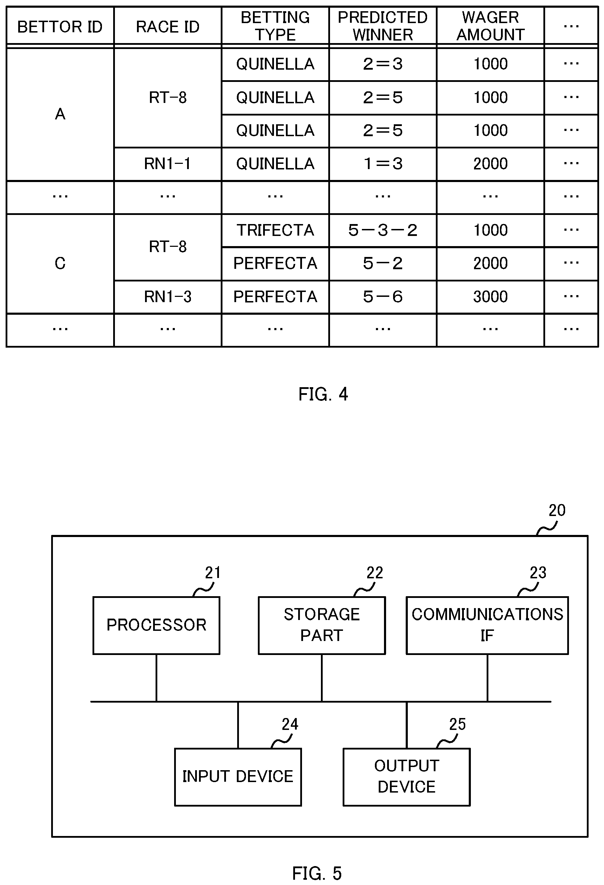

In addition, the storage part 12 stores a betting history table in which (i) the betting targets, predicted winners, or the like that are bet on by the bettor and (ii) the bettor ID are associated with each other. FIG. 4 shows an example of the betting history table. In the betting history table shown in FIG. 4, a bettor ID, a race ID, a betting type, a combination of numbers (a betting combination), and a wager amount of a bettor are associated with each other.

The communications IF 13 includes a communication controller that communicates with the terminal 20 wirelessly or by wire, via the communication network N. The communications IF 13 provides notification of data received from the terminal 20 to the processor 11. The communications IF 13 transmits the data input from the processor 11 to the terminal 20.

The input device 14 accepts an input operation from an administrator of the information processing apparatus 10, for example. The input device 14 is a keyboard, a touch panel, a mouse, or a microphone, for example. The output device 15 outputs information to the administrator of the information processing apparatus 10, for example. The output device 15 is a display, a speaker, or the like, for example.

FIG. 5 shows an example of the hardware configuration of the terminal 20. The terminal 20 includes a processor 21, a storage part 22, a communications IF 23, an input device 24, and an output device 25.

The processor 21 is a CPU, for example, and realizes various functions by executing a program stored in the storage part 22.

The storage part 22 includes a storage medium such as a read only memory (ROM), a random access memory (RAM), or the like. The storage part 22 stores the program executed by the processor 21.

The communications IF 23 includes a communication controller that communicates with the information processing apparatus 10 wirelessly or by wire via the communication network N. The communications IF 23 provides notification of data received from the information processing apparatus 10 to the processor 21. The communications IF 23 transmits the data input from the processor 21 to the information processing apparatus 10.

The input device 24 accepts an input operation from the bettor, for example. The input device 24 is a keyboard, a touch panel, a mouse, or a microphone for example. The output device 25 outputs information to the bettor, for example. The output device 25 is a display or a speaker, for example.

### <Functional block configuration>

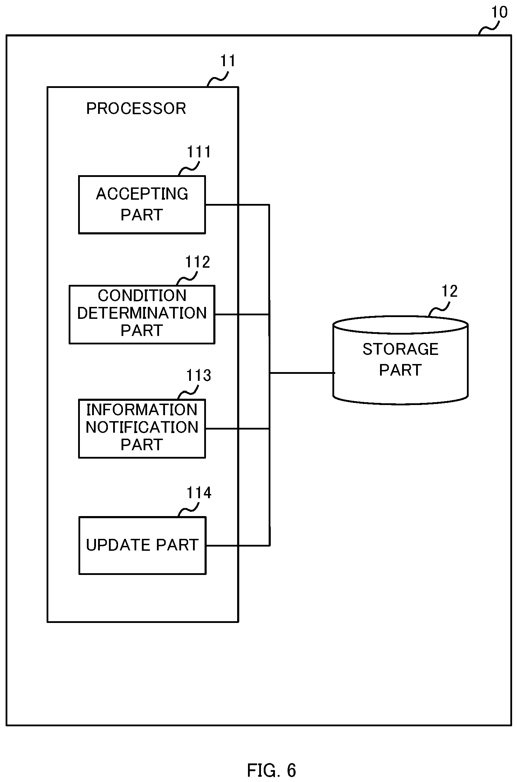

FIG. 6 shows a functional block configuration example of the processor 11. The processor 11 includes an accepting part 111, a condition determination part 112, an information notification part 113, and an update part 114. The processor 11 functions as the accepting part 111, the condition determination part 112, the information notification part 113, and the update part 114 by executing a program stored in the storage part 12.

The accepting part 111 accepts a bet on a competition by the bettor. Specifically, the accepting part 111 causes the bettor's terminal 20 to display a betting reception screen for accepting a bet on a first competition, to accept the bet on the competition by the bettor via the betting reception screen.

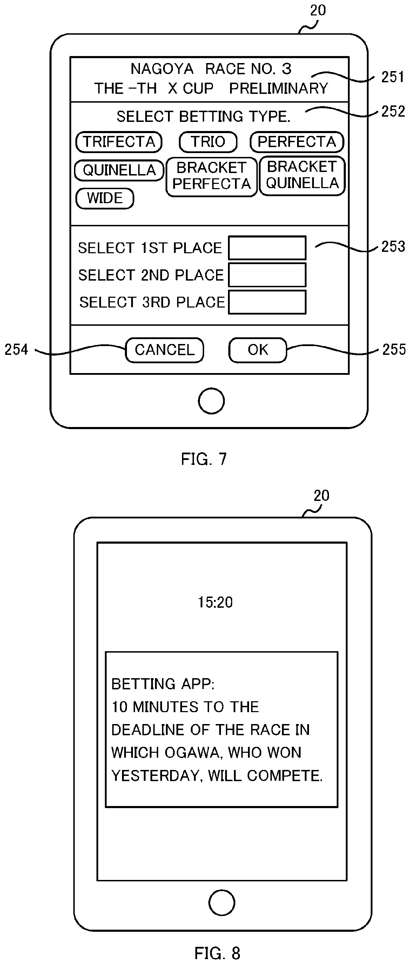

The accepting part 111 accepts the bet on the first competition by the bettor. Also, the accepting part 111 accepts a bet on a second competition that takes place after the first competition. FIG. 7 shows an example in which the betting reception screen is displayed on the terminal 20. The betting reception screen shown in FIG. 7 is displayed on the terminal 20 on which application software for betting is launched.

In the betting reception screen shown in FIG. 7, an area 251 for displaying information related to a competition for which a bet is placed, an area 252 for selecting a betting type, an area 253 for entering a predicted betting target, an operation image 254 for a cancellation operation, and an operation image 255 for confirmation operation are shown. When the bettor wishes to decide on a betting target by himself/herself, the bettor may place a bet by selecting a betting type in the area 252, entering the contestant or the starting gate number in the area 253, and selecting an "OK" button of the operation image 255.

Upon accepting the betting type corresponding to the bet on the competition and the combinations of numbers (betting combinations), the accepting part 111 displays a wager amount entry screen (not shown) for accepting an entry of a wager amount. The accepting part 111 accepts the bet on the competition by accepting the entry of the wager amount via the wager amount entry screen. Upon accepting the bet on the competition, the accepting part 111 associates (i) a bettor ID of the bettor, (ii) a race ID of the first competition, (iii) a betting type and a combination of numbers (a betting combination) selected by the bettor, and (iv) a wager amount with each other and stores them in the betting history table of the storage part 12.

The condition determination part 112 determines a condition of the competition to be notified to the user on the basis of information on the first competition after the accepting part 111 has accepted the bet on the first competition. The condition determination part 112 determines the condition of the competition to be notified to the user on the basis of the information on the first competition if the bet on the first competition accepted by the accepting part 111 is a win. More specifically, when the bet on the first competition accepted by the accepting part 111 is a win, the condition determination part 112 references the competition table stored in the storage part 12 to determine the condition of the competition to be notified to the bettor on the basis of race information associated with the race ID of the first competition.

The condition determination part 112 determines one or more conditions for each bettor. For example, the condition determination part 112 determines, as a first condition, that a competition is to be held at a racecourse included in race information associated with the identified race ID of the first competition. In addition, the condition determination part 112 determines, as a second condition, that the competition is of the race grade included in the race information. In addition, the condition determination part 112 determines, as a third condition, that a contestant selected in the bettor's bet on the first competition, among the contestants included in the race information, will compete in the competition.

Not limited to the first to third conditions, the condition determination part 112 may determine other conditions. The condition determination part 112 may further determine conditions related to the event category, type of race, or the like of the competition. For example, when the accepting part 111 accepts bets for a plurality of different types of competitions, the condition determination part 112 may determine, as the conditions of the competition to be notified to the user that the competition be the same type of competition as the first competition. The different types of competitions include at least a bicycle race, an auto race, a horse race, a motorboat race, a dog race, rugby, baseball, basketball, and soccer, for example.

The condition determination part 112 may determine the conditions of the competition to be notified to the bettor by combining at least any of a plurality of items included in the race information. For example, the condition determination part 112 may determine, as one condition, that the competition is of the race grade included in the race information associated with the identified race ID of the first competition and that a contestant selected in the bettor's bet on the first competition, among the contestants included in the race information, will compete in the competition.

The condition determination part 112 determines, for the determined conditions, a priority level for notifying the bettor of a competition that satisfies said conditions. An initial value of the priority level is a predetermined value, for example. The priority level is updated by an update part 114, which will be described later. The condition determination part 112 associates (i) a bettor ID of the bettor, (ii) condition information indicating the determined conditions, (iii) a priority level for notifying about a competition corresponding to the condition information, and (iv) determination date and time indicating the date and time when the conditions were determined with each other, and stores them in the storage part 12 as bettor-specific condition information.

The initial value of the priority level is to be the predetermined value, for example, but it is not limited to this. The condition determination part 112 may change the initial value of the priority level according to the determined conditions. For example, in a case where the competition is a bicycle race, the frequency of race meetings differs depending on the types of race grades. For example, a race graded as grand prix (GP) is held once a year, races graded as G1 are held approximately once a month, and so on. For this reason, the condition determination part 112 sets the initial value of the priority level higher as the frequency of race meetings corresponding to the race grades included in the determined conditions becomes smaller. By doing this, a competition corresponding to a condition that includes race grades that are held less frequently can be notified easily.

In addition, the condition determination part 112 determines the conditions of the competition to be notified to the user on the basis of the information on the first competition if the bet on the first competition accepted by the accepting part 111 is a win, but it is not limited to this. The condition determination part 112 may determine the conditions of the competition to be notified to the user on the basis of the information on the first competition regardless of whether or not the bet on the first competition accepted by the accepting part 111 is a win. For example, the condition determination part 112 may determine the conditions of the competition to be notified to the bettor by accepting a condition setting instruction from the terminal 20 of the bettor. In this case, the condition determination part 112 may set the priority level higher than in a case where the conditions are determined if the bet on the first competition accepted by the accepting part 111 is a win.

When the condition information indicating the determined conditions is already stored as the bettor-specific condition information in association with the bettor ID, the condition determination part 112 may update the determination date and time associated with the condition information to the current date and time and reset the priority level associated with the condition information to the initial value. By doing this, the condition indicated by the condition information is assumed to be a newly determined condition and the competition corresponding to the conditions can be easily notified, although it would be difficult for the competition corresponding to the conditions to be notified when the update part 114 lowers the priority level associated with the condition information according to the passage of time. The configuration of the update part 114 will be described later.

It should be noted that the condition determination part 112 may determine the conditions of the competition to be notified to the bettor on the basis of the plurality of competitions including the first competition on which the bettor placed a bet. For example, the condition determination part 112 may determine the conditions of the competition to be notified to the bettor on the basis of information on a competition where the bettor's bet is a win, among competitions on which the bettor placed his/her bets. In this case, when the bet on the first competition accepted by the accepting part 111 is a win, the condition determination part 112 references the betting history table and identifies the race IDs of the past competitions where the bettor's bets were wins. The condition determination part 112 may identify the race IDs only for the competitions where the bettor's bets were wins within a predetermined period of time from the current time. The condition determination part 112 references the competition table stored in the storage part 12, and determines the conditions of the competition to be notified to the bettor on the basis of the race information associated with the race ID of the first competition and the race information associated with the identified race IDs.

The condition determination part 112 may determine the conditions of the competition to be notified to the bettor on the basis of information common to the race information associated with the identified race ID of the first competition and the race information associated with the identified race IDs of the past competitions where the bettor's bets were wins. For example, if a racecourse and a race grade are common to (i) the race information associated with the identified race ID of the first competition and (ii) the race information associated with the identified race IDs of the past competitions where the bettor's bets were wins, the condition determination part 112 determines the conditions of the competition to be notified to the bettor on the basis of the racecourse and the race grade. By doing this, the information processing apparatus 10 can set notification conditions suitable for the bettor, on the basis of the plurality of competitions. The notification conditions may include information for identifying a competition and information relevant to a timing at which the information on the competition is notified to the user.

The information notification part 113 notifies the bettor corresponding to the conditions determined by the condition determination part 112 about information on the second competition that satisfies the conditions among the plurality of competitions on which a bet can be placed. Specifically, the information notification part 113 identifies, as the second competition, one or more competitions that satisfy the conditions indicated by the condition information included in the bettor-specific condition information stored in the storage part 12, among the plurality of competitions that take place after the first competition. The information notification part 113 identifies one or more competitions that satisfy the conditions indicated by the condition information as the second competition for each of a plurality of pieces of condition information included in the bettor-specific condition information.

Upon identifying one or more second competitions that satisfy the conditions, the information notification part 113 identifies a bettor ID associated with the condition information indicated by the conditions in the bettor-specific condition information. Then, the information notification part 113 notifies information on the identified one or more second competitions to the terminal 20 of a bettor corresponding to the identified bettor ID. For example, the information notification part 113 notifies the terminal 20 of the information on the second competition using push notifications and causes the terminal 20 to display the information on the second competition.

FIG. 8 shows an example in which the information on the second competition is displayed on the terminal 20. FIG. 8 shows an example in which a message indicating the information on the second competition is displayed on a standby screen which is displayed when the bettor operates the terminal 20 or when a piece of information is pushed in a state where the terminal 20 is not operated. The message indicating the information on the second competition is generated on the basis of a condition corresponding to the second competition, for example. FIG. 8 shows a display example of a case where a condition that a predetermined contestant will compete is set as the condition corresponding to the second competition, and it can be confirmed that a message stating that the predetermined contestant will compete is displayed. When the message is selected on the standby screen in the example shown in FIG. 8, the betting reception screen shown in FIG. 7 is displayed on the terminal 20, and the bettor can place a bet on the second competition.

The information notification part 113 may highlight the information corresponding to the condition indicated by the condition information and display it on a notification screen. For example, when the condition indicated by the condition information is that a predetermined contestant competes in a competition, the information notification part 113 may highlight the predetermined contestant in the example shown in FIG. 8. By doing this, the information processing apparatus 10 can encourage the bettor to place a bet on the second competition.

If the bettor has not placed a bet by a predetermined time period before a deadline for placing a bet on the second competition, there is a high possibility that the bettor has not made up his/her mind about whether to place a bet on the second competition or that the bettor is not aware that the second competition is to be held. Therefore, the information notification part 113 may notify the bettor about the information on the second competition if the bettor has not placed a bet by the predetermined time period before the deadline for placing a bet on the second competition. A timing before the predetermined time period of the deadline is a timing before an average timing by which a bettor who has seen the notification and placed a bet meets the deadline. In this way, the information processing apparatus 10 can notify the bettor of the information on the second competition so that a bet can be placed in time if there is a high possibility that the user is not sure about betting or that the user is not aware that the second competition is to be held, and therefore the bettor can be encouraged to place a bet.

When there are a plurality of competitions that satisfy the conditions, the information notification part 113 may notify the user about information on the second competition selected on the basis of a predetermined criterion from among the plurality of competitions. When there are the plurality of competitions that satisfy the conditions corresponding to the condition information associated with the bettor ID, the information notification part 113 selects one or more competitions as the second competition from among the plurality of competitions on the basis of the priority level associated with the condition information in the bettor-specific condition information. For example, the information notification part 113 may select a competition corresponding to the highest priority level condition as the second competition, or may select competitions corresponding to conditions whose priority levels are up to a predetermined level as the second competition.

In addition, a competition corresponding to each of a plurality of conditions may be the same competition. Therefore, the information notification part 113 may calculate a total of the priority levels of one or more conditions corresponding to the competition, and select a competition for which the total is within the predetermined level as the second competition.

The update part 114 updates the priority level of the conditions corresponding to the second competition depending on how a bettor places his/her bet on the second competition after the information on the second competition has been notified to the bettor. For example, if the accepting part 111 accepted the bettor's bet on the second competition after the information on the second competition was notified to the bettor, the update part 114 updates the priority level of the conditions corresponding to the second competition to a higher priority level than before the update by adding a predetermined value to said priority level. Further, if the accepting part 111 did not accept the bettor's bet on the second competition after the information on the second competition was notified to the bettor, the update part 114 updates the priority level of the conditions corresponding to the second competition to a lower priority level than before the update by subtracting a predetermined value from said priority level. By doing this, the information processing apparatus 10 can make information on the second competition on which the bettor is likely to place his/her bet be notified easily, and make information on the second competition on which the bettor is less likely to place a bet harder to be notified.

The update part 114 updates the priority level of the conditions on the basis of an elapsed time since the condition determination part 112 has determined the conditions. For example, the update part 114 references the determination date and time included in the bettor-specific condition information and updates the priority level to a lower priority level than before the update for every passing of a predetermined elapsed time since the condition determination part 112 has determined the conditions by subtracting a predetermined value from the priority level associated with said conditions. By doing this, the information processing apparatus 10 can notify information on a competition by reflecting a temporal change in the betting trend of a bettor. For example, the information processing apparatus 10 can notify information on a competition on which a bet is likely to be placed on the basis of the latest betting trend.

### <Processing flow of the information processing apparatus 10>

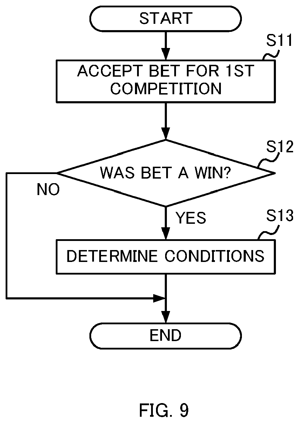

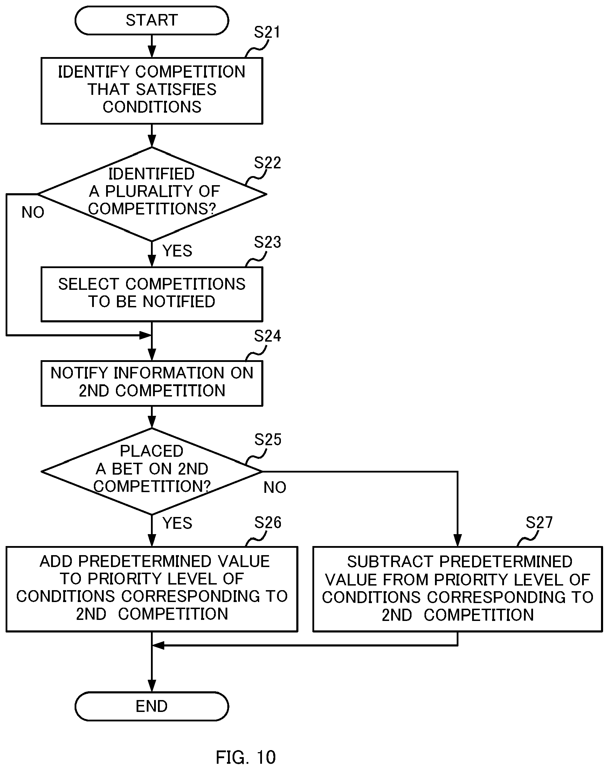

FIGS. 9 and 10 are each a flowchart showing processing of the information processing apparatus 10. FIG. 9 is a flowchart showing processing of how the information processing apparatus 10 determines conditions of a competition to be notified to a bettor. FIG. 10 is a flowchart showing processing in which the information processing apparatus 10 notifies the bettor about information on a second competition.

First, processing for determining the conditions of the competition to be notified to the bettor will be described with reference to the flowchart shown in FIG. 9. The accepting part 111 accepts a bet on a first competition from the bettor (S11). Next, the condition determination part 112 determines whether or not the bet on the first competition accepted by the accepting part 111 was a win (S12). Upon determining that the bet on the first competition was a win, the condition determination part 112 shifts the process to S13, and upon determining that the bet on the first competition was not a win, the condition determination part 112 ends the processes relevant to this flowchart.

In S13, the condition determination part 112 determines conditions of a competition to be notified to the user on the basis of the information on the first competition, associates (i) a bettor ID of the bettor and (ii) condition information indicating the determined conditions in association with each other, and stores them in the storage part 12 as bettor-specific condition information (S13).

Next, processing in which the information processing apparatus 10 notifies the bettor about the information on the second competition will be described with reference to the flowchart shown in FIG. 10. The information notification part 113 identifies a competition that satisfies the conditions determined by the condition determination part 112 among a plurality of competitions on which a bet can be placed (S21).

Next, the information notification part 113 determines whether or not a plurality of competitions were identified (S22). Upon determining that a plurality of competitions were identified, the information notification part 113 selects, as the second competition, competitions to be notified to the bettor from among the plurality of competitions in S23, and notifies the information on the second competition in S24. Upon determining that a plurality of competitions were not identified but one competition was identified, the information notification part 113 determines the identified competition as the second competition, and notifies the information on the second competition in S24.

Next, the update part 114 determines whether or not the bettor placed a bet on the second competition (S25). When determining that the bettor placed his/her bet on the second competition, the update part 114 updates a priority level associated with condition information indicating the conditions corresponding to the second competition by adding a predetermined value to the priority level (S26). If the update part 114 determines that the bettor did not place his/her bet on the second competition, the update part 114 updates the priority level associated with the condition information indicating the conditions corresponding to the second competition by subtracting a predetermined value from the priority level (S27).

### <Effect of the betting system 1>

As described above, the accepting part 111 accepts the bet placed on the first competition by the bettor. The condition determination part 112 determines the conditions of the competition to be notified to the bettor on the basis of the information on the first competition if the bet on the first competition accepted by the accepting part 111 is a win. The information notification part 113 notifies the bettor about the information on the second competition that satisfies the conditions determined by the condition determination part 112 among the plurality of competitions on which a bet can be placed. Since the accepting part 111, the condition determination part 112, and the information notification part 113 operate in this manner, the bettor can grasp that the second competition corresponding to the information on the first competition in which his/her bet was a win will be held, and can place a bet on this second competition. Therefore, the information processing apparatus 10 can make it easier for the bettor to place bets on competitions continuously.

The present disclosure is explained on the basis of the exemplary embodiments. The technical scope of the present disclosure is not limited to the scope explained in the above embodiments and it is possible to make various changes and modifications within the scope of the invention. For example, in the above-described embodiment, the accepting part 111 accepts the bet placed on the first competition by the bettor, and the condition determination part 112 determines the conditions of the competition to be notified to the bettor on the basis of the information on the first competition if the bet on the first competition accepted by the accepting part 111 is a win, but it is not limited to this.

For example, the accepting part 111 may accept a bet placed on a first competition by an associated user who is associated with the bettor. If the bet on the first competition accepted from the associated user is a win, the condition determination part 112 may determine a condition of the competition to be notified to the bettor on the basis of information on the first competition.

The associated user associated with the bettor is another user whose friend request is accepted by the bettor or another user who accepted the bettor's friend request, and has revealed his/her bets to the user, for example. The associated user associated with the bettor may be a participant of a streaming video bookmarked by the bettor or another user whom the bettor follows. When the condition determination part 112 notifies the bettor about information on the second competition corresponding to a condition determined on the basis of the associated user, the information notification part 113 may include information indicating the associated user in the information on the second competition, such as "10 minutes to the deadline of a competition in which the Contestant X, who is in Mr. A's winning bet, will participate".

In the above-described embodiments, the information processing apparatus 10 accepts the bet in the competition in which contestants move in a competition field, but it is not limited to this. For example, the information processing apparatus 10 may accept a bet placed on (i) a player participating in e-sports such as a competitive game or (ii) a character operated by the player in a competitive game. In this case, when the player or character whom the bet is placed on by the bettor wins, it is assumed that the bet is a win. Also, when the accepting part 111 accepts bets for a plurality of different types of competitions, it is assumed that the plurality of different types of competitions include e-sports.

Also, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

In addition to the above-described embodiments, the following are additionally described.

### (Appendix 1)

An information processing apparatus includes: an accepting part that accepts a bet on a first competition placed by a user or an associated user associated with the user; a condition determination part that determines a condition of a competition to be notified to the user on the basis of information on the first competition; and an information notification part that notifies the user about information on a second competition that satisfies the condition determined by the condition determination part among a plurality of competitions on which a bet can be placed. Since the information processing apparatus is configured in this manner, the user (bettor) can easily continue betting on competitions.

### (Appendix 2)

The information processing apparatus according to Appendix 1, wherein the condition determination part determines the condition of the competition to be notified to the user on the basis of information on the first competition if the bet on the first competition accepted by the accepting part is a win. Since the information processing apparatus is configured in this manner, the bettor is notified that another competition similar to the competition where the bettor's bet was a win will take place, so that placing bets continuously on the competitions becomes easier for the bettor because the possibility of the bettor placing a bet on the notified competition increases.

### (Appendix 3)

The information processing apparatus according to Appendix 1, wherein the condition determination part determines the conditions of the competition to be notified to the user on the basis of the information on the first competition regardless of whether or not the bet on the first competition accepted by the accepting part is a win. Since the information processing apparatus is configured in this manner, the bettor is notified that another competition similar to the competition of which the bettor's bet was a win will take place, so that placing bets continuously on the competitions becomes easier for the bettor because the bettor lowers his/her resistance toward the notified competition.

### (Appendix 4)

The information processing apparatus according to any one of Appendixes 1 to 3, wherein the condition determination part determines the condition on the basis of information on a plurality of competitions including the first competition on which the user or the associated user placed his/her bet. Since the information processing apparatus is configured in this manner, notification conditions suitable for the bettor can be set on the basis of the plurality of competitions.

### (Appendix 5)

The information processing apparatus according to Appendix 4, wherein the condition determination part determines the condition on the basis of information on a competition where the user's bet is a win among competitions on which the users bet. Since the information processing apparatus is configured in this manner, the information on the second competition can be notified in response to the user's preferences.

### (Appendix 6)

The information processing apparatus according to any one of Appendixes 1 to 5, wherein the information notification part notifies the user of information on the second competition if the user has not placed a bet on the second competition. Since the information processing apparatus is configured in this manner, it is possible to encourage the user to place a bet on the second competition.

### (Appendix 7)

The information processing apparatus according to Appendix 6, wherein the information notification part notifies the user about the information on the second competition if the user has not placed a bet by a predetermined time period before a deadline for placing a bet on the second competition. Since the information processing apparatus is configured in this manner, the information on the second competition can be notified when there is a high possibility that the user is not sure about betting.

### (Appendix 8)

The information processing apparatus according to any one of Appendixes 1 to 7, the information notification part notifies the user about information on the second competition selected from among a plurality of competitions on the basis of a predetermined criterion if there are the plurality of competitions that satisfy the condition. Since the information processing apparatus is configured in this manner, it is possible to notify information on the competition having a high priority level and a high possibility of being bet by the user.

### (Appendix 9)

The information processing apparatus according to Appendix 8, wherein the condition determination part determines one or more of the conditions for each the user, and a priority level is determined for the one or more of the conditions; and the information notification part notifies the user about the information on the second competition selected from the plurality of competitions on the basis of the priority level of the one or more conditions satisfied by each of the plurality of competitions. Since the information processing apparatus is configured in this manner, it is possible to notify information on the competition on which the user is highly likely to place a bet.

### (Appendix 10)

The information processing apparatus according to Appendix 9, further includes an update part that updates the priority level of the conditions depending on how a bettor places his/her bet on the second competition after the information on the second competition was notified to the user. Since the information processing apparatus is configured in this manner, the information on the second competition can be appropriately notified depending on how the user places his/her bet.

### (Appendix 11)

The information processing apparatus according to Appendix 9, further includes an update part that updates the priority level of the conditions on the basis of an elapsed time since determination of the conditions. Since the information processing apparatus is configured in this manner, it is possible to notify information on a competition by reflecting a temporal change in the betting trend of the user. For example, it is possible to notify information on a competition on which a bet is likely to be placed on the basis of the latest betting trend.

### (Appendix 12)

An information processing method includes the computer-implemented steps of: accepting a bet on a first competition placed by a user or an associated user associated with the user; determining a condition of a competition to be notified to the user on the basis of information on the first competition; and notifying the user about information on a second competition that satisfies the condition determined in the determining among a plurality of competitions on which a bet can be placed. By executing such an information processing method, the user (bettor) can easily continue betting on competitions.

### (Appendix 13)

A program that causes a computer to function as: an accepting part that accepts a bet on a first competition placed by a user or an associated user associated with the user; a condition determination part that determines a condition of a competition to be notified to the user on the basis of information on the first competition; and an information notification part that notifies the user about information on a second competition that satisfies the condition determined by the condition determination part among a plurality of competitions on which a bet can be placed. By executing such a program with a processor, the user (bettor) can easily continue betting on competitions.

### [Description of the reference numerals]

- 1: Betting system
- 10: Information processing apparatus
- 11: Processor
- 12: Storage part
- 13: Communications IF
- 14: Input device
- 15: Output device
- 20: Terminal
- 21: Processor
- 22: Storage part
- 23: Communications IF
- 24: Input device
- 25: Output device
- 111: Accepting part
- 112: Condition determination part
- 113: Information notification part
- 114: Update part

## Claims

1. An information processing apparatus including:
an accepting part that accepts a bet on a first competition placed by a user or an associated user associated with the user;
a condition determination part that determines a condition of a competition to be notified to the user on the basis of information on the first competition; and
an information notification part that notifies the user about information on a second competition that satisfies the condition determined by the condition determination part among a plurality of competitions on which a bet can be placed.

2. The information processing apparatus according to claim 1, wherein the condition determination part determines the condition of the competition to be notified to the user on the basis of the information on the first competition if the bet on the first competition accepted by the accepting part is a win.

3. The information processing apparatus according to claim 1, wherein the condition determination part determines the condition of the competition to be notified to the user on the basis of the information on the first competition regardless of whether or not the bet on the first competition accepted by the accepting part is a win.

4. The information processing apparatus according to any one of claims 1 to 3, wherein the condition determination part determines the condition on the basis of information on a plurality of competitions including the first competition on which the user or the associated user placed his/her bet.

5. The information processing apparatus according to claim 4, wherein the condition determination part determines the condition on the basis of information on a competition where the user's bet is a win among competitions on which the user bet.

6. The information processing apparatus according to any one of claims 1 to 5, wherein the information notification part notifies the user of information on the second competition if the user has not placed a bet on the second competition.

7. The information processing apparatus according to claim 6, wherein the information notification part notifies the user about the information on the second competition if the user has not placed a bet by a predetermined time period before a deadline for placing a bet on the second competition.

8. The information processing apparatus according to any one of claims 1 to 7, wherein the information notification part notifies the user about information on the second competition selected from among a plurality of competitions on the basis of a predetermined criterion if there are the plurality of competitions that satisfy the condition.

9. The information processing apparatus according to claim 8, wherein the condition determination part determines one or more of the conditions for each of the users, and a priority level is determined for the one or more of the conditions; and
the information notification part notifies the user about the information on the second competition selected from the plurality of competitions on the basis of the priority level of the one or more conditions satisfied by each of the plurality of competitions.

10. The information processing apparatus according to claim 9 further comprising
an update part that updates the priority levels of the conditions depending on how a bettor places his/her bet on the second competition after the information on the second competition was notified to the user.

11. The information processing apparatus according to claim 9 further comprising
an update part that updates the priority level of the conditions on the basis of an elapsed time since determination of the conditions.

12. An information processing method includes computer-implemented steps of:
accepting a bet on a first competition placed by a user or an associated user associated with the user;
determining a condition of a competition to be notified to the user on the basis of information on the first competition; and
notifying the user about information on a second competition that satisfies the condition determined in the determining among a plurality of competitions on which a bet can be placed.

13. A program that causes a computer to function as:
an accepting part that accepts a bet on a first competition placed by a user or an associated user associated with the user;
a condition determination part that determines a condition of a competition to be notified to the user on the basis of information on the first competition; and
an information notification part that notifies the user about information on a second competition that satisfies the condition determined by the condition determination part among a plurality of competitions on which a bet can be placed.
